# FASCICULE DE BREVET EUROPEEN

(11) **EP 0 683 394 B1**
(45) Date de publication et mention de la délivrance du brevet: **23.01.2002**
(21) Numéro de dépôt: 95401087.2
(22) Date de dépôt: 10.05.1995
(51) Int. Cl.: G01N 29/22, B25B 23/14

(54) **Dispositif d'accrochage d'un instrument de mesure sur une tête de vis**
Vorrichtung zum Festhalten eines Messinstruments an einem Schraubenkopf
Device for attaching a measuring instrument on a screw head

(30) Priorité: 18.05.1994 FR 9406086
(43) Date de publication de la demande: 22.11.1995
(73) Titulaire: FACOM, 91423 Morangis Cédex (FR)
(72) Inventeur: Gozlan, Jean-Claude, F-92100 Boulogne (FR)
(74) Mandataire: Jacobson, Claude

(56) Documents cités:
- EP-A- 0 381 791
- DE-C- 4 038 507
- GB-A- 2 037 430
- US-A- 4 294 122
- US-A- 4 295 377

## Description

La présente invention est relative à un dispositif d'accrochage d'un instrument sur l'extérieur de la tête d'entraînement d'un organe fileté. Elle s'applique en particulier à l'accrochage sur une telle tête d'un instrument qui fait partie d'un appareil de mesure dynamométrique.

Diverses méthodes ont été proposées pour assurer le serrage prédéterminé des organes filetés. Certaines de ces méthodes comprennent l'utilisation de transducteurs solidaires de la surface d'extrémité de la tête d'entraînement, et la fixation sur cette tête d'un instrument de mesure de l'indication de ces transducteurs. Dans d'autres méthodes, les transducteurs sont portés par l'instrument que l'on fixe sur la tête d'entraînement. Il peut s'agir par exemple d'une mesure par ultra-sons, permettant de mesurer l'allongement de l'organe fileté sous couple de serrage, ou bien d'une mesure de déformation de la tête au moyen de contacts et d'éléments piézorésistifs collés sur cette tête, comme décrit dans le FR-A-2 696 215.

Dans de tels cas, un instrument faisant partie de l'appareil de mesure dynamométrique, relié à une électronique de calcul et d'affichage, doit être fixé sur la tête de l'organe fileté.

L'invention a pour but de permettre une mise en oeuvre particulièrement commode de ces dernières méthodes, ne nécessitant pas le démontage de l'instrument pour modifier le degré de serrage de l'organe fileté.

A cet effet, l'invention a pour objet un dispositif d'accrochage d'un instrument sur l'extérieur de la tête d'entraînement d'un organe fileté, caractérisé en ce qu'il comprend un noyau central qui, en service, est solidaire de l'instrument, et d'où partent des griffes munies de moyens d'accrochage du noyau sur la surface périphérique de la tête, ces griffes laissant, dans au moins une direction, un libre accès à des formes d'entraînement diamétralement opposées de cette tête, les moyens d'accrochage étant adaptés pour coopérer avec une région quelconque de la hauteur de la surface périphérique de la tête.

Le dispositif d'accrochage suivant l'invention peut comporter une ou plusieurs des caractéristiques suivantes :
- les moyens d'accrochage comprennent au moins un élément d'appui sur un côté ou sur un coin de la tête, prévu sur une première griffe, et une vis de serrage radiale vissée à travers une deuxième griffe diamétralement opposée à la première griffe;
- lorsque le dispositif est destiné à l'accrochage de l'instrument sur une tête en six-pans, les moyens d'accrochage comprennent au moins deux éléments d'appui adaptés pour coopérer respectivement avec deux pans adjacents de la tête, et deux vis de serrage radiales respectivement diamétralement opposées à ces deux éléments d'appui;
- lorsque le dispositif est destiné à l'accrochage de l'instrument sur une tête en six-pans, les moyens d'accrochage comprennent deux éléments d'appui en forme de V ouvert à 120°, portés par deux griffes diamétralement opposées;
- l'un des deux éléments d'appui est solidaire de la griffe qui le porte, tandis que l'autre est montée rotative à l'extrémité d'une vis de serrage radiale qui est vissée à travers l'autre griffe;
- les deux griffes sont articulées sur le noyau et se prolongent au-delà de celui-ci, leurs extrémités opposées aux éléments d'appui étant reliées par un mécanisme d'écartement, notamment à genouillère;
- le noyau comporte une partie d'appui destinée à serrer contre la surface supérieure de la tête une région en saillie radiale de l'instrument;
- le noyau entoure une partie de l'instrument adjacente à ladite région avec un jeu radial.

L'invention a également pour objet un appareil dynamométrique de détermination du degré de serrage d'un organe fileté, caractérisé en ce qu'il comprend un instrument et un dispositif d'accrochage de cet instrument tel que défini ci-dessus.

Dans un mode de réalisation de cet appareil, le noyau du dispositif d'accrochage est interposé entre une collerette extérieure de l'instrument et un organe de retenue de cet instrument.

Des exemples de réalisation de l'invention vont maintenant être décrits au regard des dessins annexés, sur lesquels :
- la Figure 1 représente l'assemblage de deux pièces au moyen d'un organe fileté;
- la Figure 2 est une vue en coupe longitudinale d'une pièce d'un instrument de mesure dynamométrique de cet assemblage;
- la Figure 3 est une vue analogue d'une autre pièce de cet instrument;
- la Figure 4 est une vue de dessus de la pièce de la Figure 3;
- la Figure 5 est une vue en coupe longitudinale, prise en coupe suivant la ligne V-V de la Figure 6, d'une troisième pièce du même instrument et du dispositif d'accrochage de l'invention;
- la Figure 6 est une vue de dessus de l'objet de la Figure 5;
- la Figure 7 représente en coupe longitudinale l'instrument accroché sur l'assemblage de la Figure 1, prise en coupe suivant la ligne VII-VII de la Figure 8;
- la Figure 8 est une vue prise en coupe suivant la ligne VIII-VIII de la Figure 7;
- la Figure 9 est une vue analogue à la Figure 8 d'une variante; et
- la Figure 10 représente schématiquement, en coupe verticale, une autre variante du dispositif d'accrochage.

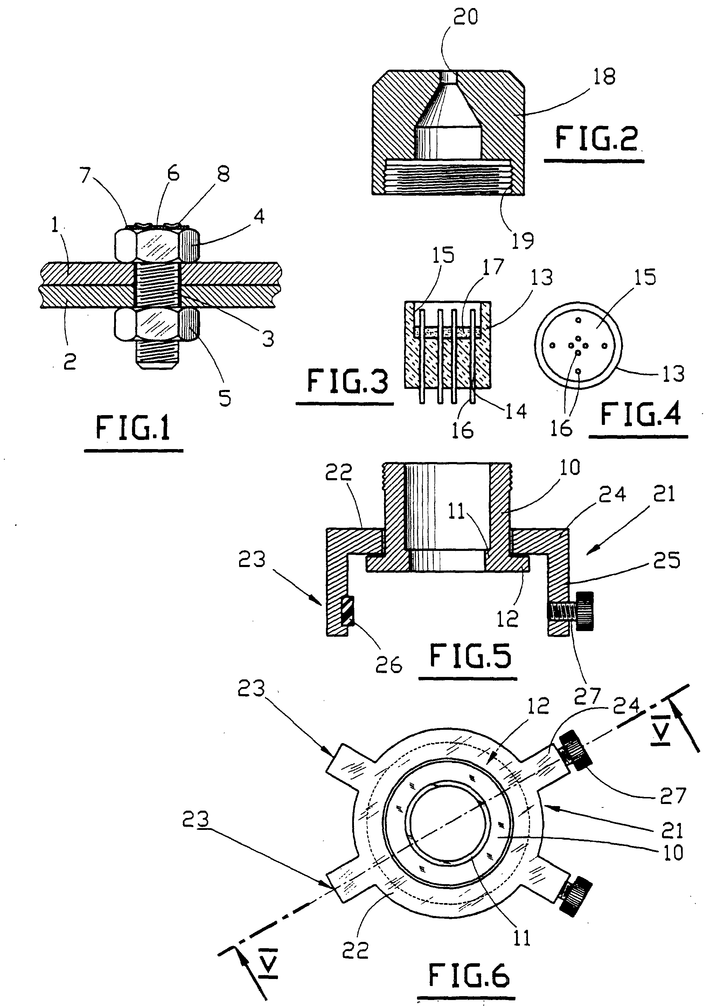

On a représenté à la Figure 1 l'assemblage de deux pièces planes 1 et 2, à faces parallèles, au moyen d'un boulon constitué d'une vis 3 à tête 4 en six-pans et d'un écrou inférieur 5. Le degré de serrage du boulon est déterminé par la méthode décrite dans le FR-A-2 696 215 précité, à partir de la mesure de la déformation de la tête 4.

Pour mesurer cette déformation, la face supérieure de la tête 4 porte une couche métallique centrale 6 et une couche métallique annulaire 7, reliées l'une à l'autre par une couche piézorésistive 8. Lors du serrage du boulon, la déformation de la tête 4 développe une tension électrique entre les couches 6 et 7, de sorte que la mesure de cette tension permet, par des calculs appropriés, de déterminer le degré de serrage réel obtenu.

L'appareil de mesure comprend, outre une électronique de calcul et d'affichage non représentée, un instrument 9 porte-contacts constitué essentiellement de trois pièces :
- une douille-support 10 (Figure 5) cylindrique, extérieurement filetée, qui comporte à sa base une collerette intérieure 11 et une collerette extérieure 12;
- un bloc à contacts 13 cylindrique, en matière isolante (Figures 3 et 4), percé de huit canaux verticaux 14 et présentant un évidement circulaire 15 dans sa face supérieure. Dans chaque canal 14 est emmanchée à force une aiguille-contact 16. Chaque aiguille dépasse vers le haut dans l'évidement 15, où elle est fixée au moyen d'une couche de colle 17, et elle dépasse vers le bas. Comme on le voit sur la Figure 4, il est prévu quatre aiguilles 16 dans la région centrale du bloc 13, et quatre autres aiguilles dans la région périphérique de l'évidement 15;
- un chapeau 18 (Figure 2) qui présente intérieurement un alésage taraudé inférieur 19 et, au-dessus de celui-ci, une cavité qui débouche vers le haut par un orifice central 20.

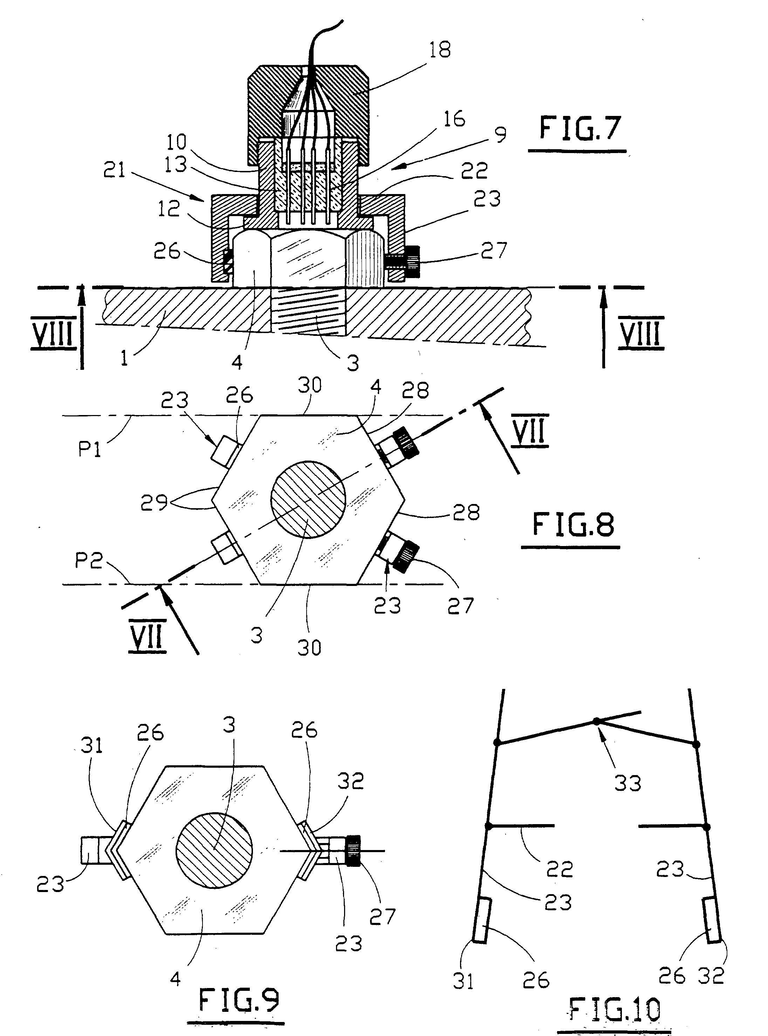

L'instrument 9 est complété par un dispositif d'accrochage 21 que l'on voit aux Figures 5 à 8. Ce dispositif comprend un noyau annulaire 22 qui peut s'enfiler avec un faible jeu sur la douille 10 et d'où partent quatre griffes 23 en forme de L. Chaque griffe comporte ainsi une partie de liaison horizontale 24 reliée au noyau et une partie principale 25 dirigée vers le bas. En vue en plan (Figures 6 et 8), les griffes forment deux paires de griffes diamétralement opposées, dont l'une porte intérieurement un patin 26 en élastomère et dont l'autre est traversée par un trou taraudé dans lequel se visse une vis de serrage 27 à tête moletée. Les deux griffes de même nature sont espacées angulairement d'environ 45°, mais les axes des deux vis 27, de même que les normales aux faces inférieures des patins 26, forment entre eux des angles de 60°.

L'instrument 9 se monte en enfilant le noyau 22 sur la douille 10, puis en introduisant le bloc 13 dans cette douille, puis en fixant ce dernier en place, en appui sur la collerette 11, par vissage du chapeau 18 sur la douille 10, l'épaulement de fond de l'alésage 19 appuyant alors sur la face annulaire supérieure du bloc 13. Des fils électriques, indiqués uniquement sur la Figure 7, partent de l'extrémité supérieure de chaque aiguille 16, traversent l'orifice 20 et sont reliés à l'électronique de l'appareil de mesure.

Comme on le voit sur la Figure 7, lorsque le montage de l'instrument est terminé, le noyau 22 est prisonnier, avec un large débattement axial, entre le chapeau 18 et la collerette extérieure 12 de la douille 10.

Pour accrocher l'instrument 9 sur la tête 4, on pose la collerette 12 sur la région périphérique de la face supérieure de celle-ci, autour des contacts 8, ce qui amène les aiguilles-contacts 16 centrales au contact de la couche métallique centrale 6 et les aiguilles-contacts 16 extérieures au contact de la couche métallique annulaire 7. Les vis 27 étant largement dévissées, on amène le noyau 22 contre la collerette 12, les quatre griffes 23 coulissant alors librement le long de quatre pans de la tête 4. En vissant les vis 27, celles-ci viennent au contact de deux pans adjacents 28 (Figure 8), et elles amènent par réaction les patins 26 contre les deux pans opposés 29. La position et le dimensionnement des quatre griffes et des vis 27 sont tels qu'en vue en plan, elles sont entièrement contenues entre les deux plans P1, P2 définis par les deux pans parallèles restants 30 de la tête 4.

On peut donc mettre une pince en prise avec les deux pans 30, qui sont librement accessibles soit par le haut, soit latéralement, et régler le serrage du boulon tout en suivant les indications affichées par l'appareil de mesure.

En variante (Figure 9), les quatre griffes 23 peuvent être remplacées par deux griffes 23 diamétralement opposées, dont l'une porte une mâchoire 31 à section en forme de V ouvert à 120°, tandis que l'autre griffe est traversée par une vis de serrage radiale 27 à l'extrémité intérieure de laquelle est montée librement rotative une autre mâchoire 32 à section analogue. Chaque mâchoire peut, comme précédemment, être munie d'un patin intérieur souple 26 pour augmenter le frottement sur la tête 4.

En variante encore (Figure 10), les griffes 23, au nombre de deux, peuvent être articulées en des points diamétralement opposés du noyau 22, se prolonger vers le haut jusqu'au-dessus du chapeau 18, et avoir leurs extrémités supérieures reliées par un mécanisme d'écartement 33, par exemple, comme représenté, à un mécanisme articulé du type genouillère. Sur la Figure 10, on a représenté des patins 26 à l'extrémité inférieure des griffes 23, qui présentent de nouveau une section horizontale en V ouvert à 120° pour coopérer avec un coin du six-pans.

On comprend que l'invention s'applique également au serrage de têtes de vis ou d'écrous ayant des formes d'entraînement mâles autres qu'un six-pans. La forme des griffes est alors adaptée à ces formes d'entraînement.

## Revendications

1. Dispositif d'accrochage d'un instrument (9) sur l'extérieur de la tête d'entraînement (4) d'un organe fileté (3), **caractérisé en ce qu'**il comprend un noyau central (22) qui, en service, est solidaire de l'instrument, et d'où partent des griffes (23) munies de moyens (26, 27; 31, 32) d'accrochage du noyau sur la surface périphérique de la tête, ces griffes laissant, dans au moins une direction, un libre accès à des formes d'entraînement diamétralement opposées (30) de cette tête, les moyens d'accrochage (26, 27; 31, 32) étant adaptés pour coopérer avec une région quelconque de la hauteur de la surface périphérique de la tête (4).

2. Dispositif suivant la revendication 1 ou 1, **caractérisé en ce que** les moyens d'accrochage comprennent au moins un élément (26) d'appui sur un côté ou sur un coin de la tête (4), prévu sur une première griffe (23), et une vis de serrage radiale (27) vissée à travers une deuxième griffe (23) diamétralement opposée à la première griffe.

3. Dispositif suivant la revendication 2, pour l'accrochage de l'instrument (9) sur une tête (4) en six-pans, **caractérisé en ce que** les moyens d'accrochage comprennent au moins deux éléments d'appui (26) adaptés pour coopérer respectivement avec deux pans adjacents (29) de la tête (4), et deux vis de serrage radiales (27) respectivement diamétralement opposées à ces deux éléments d'appui.

4. Dispositif suivant la revendication 1, **caractérisé en ce que** les moyens d'accrochage comprennent deux éléments d'appui (31, 32) en forme de V ouvert à 120°, portés par deux griffes (23) diamétralement opposées.

5. Dispositif suivant la revendication 4, **caractérisé en ce que** l'un (31) des deux éléments d'appui est solidaire de la griffe (23) qui le porte, tandis que l'autre est montée rotative à l'extrémité d'une vis (27) de serrage radiale qui est vissée à travers l'autre griffe (23).

6. Dispositif suivant la revendication 4, **caractérisé en ce que** les deux griffes (23) sont articulées sur le noyau (22) et se prolongent au-delà de celui-ci, leurs extrémités opposées aux éléments d'appui (31, 32) étant reliées par un mécanisme d'écartement (33), notamment à genouillère.

7. Dispositif suivant l'une quelconque des revendications 1 à 6, **caractérisé en ce que** le noyau (22) comporte une partie d'appui destinée à serrer contre la surface supérieure de la tête (4) une région (12) en saillie radiale de l'instrument (9).

8. Dispositif suivant la revendication 7, **caractérisé en ce que** le noyau (22) entoure une partie (10) de l'instrument (9) adjacente à ladite région (12) avec un jeu radial.

9. Appareil dynamométrique de détermination du degré de serrage d'un organe fileté (3), **caractérisé en ce qu'**il comprend un instrument (9) et un dispositif (21) d'accrochage de cet instrument suivant l'une quelconque des revendications 1 à 8.

10. Appareil suivant la revendication 9, **caractérisé en ce que** le noyau (22) du dispositif d'accrochage (21) est interposé entre une collerette extérieure (12) de l'instrument (9) et un organe de retenue (18) de cet instrument.

## Patentansprüche

1. Vorrichtung zum Festhalten eines Instruments (9) an der Außenseite des Betätigungskopfes (4) eines Gewindebauteils (3), **dadurch gekennzeichnet, daß** sie einen zentralen Kern (22) aufweist, der, im Gebrauch, mit dem Instrument einstückig ist, und von dem Haken (23) ausgehen, welche mit Elementen (26, 27; 31, 32) zum Festhalten des Kerns an der Umfangsfläche des Kopfes versehen sind, wobei die Haken in mindestens einer Richtung freien Zugriff zu Betätigungsformen des Kopfes (30) lassen, welche diametral entgegengesetzt liegen, wobei die Elemente zum Festhalten (26, 27; 31, 32) so ausgebildet sind, daß sie mit einem beliebigen Bereich der Höhe der Umfangsfläche des Kopfes (4) zusammenarbeiten können.

2. Vorrichtung gemäß Anspruch 1, **dadurch gekennzeichnet, daß** die Elemente zum Festhalten mindestens ein Element zum Abstützen (26) auf einer Seite oder an einer Ecke des Kopfes (4) aufweisen, welches an einem ersten Haken (23) vorgesehen ist, sowie eine radiale Stellschraube (27), die durch einen zweiten Haken (23) geschraubt ist, der dem ersten Haken diametral entgegengesetzt ist.

3. Vorrichtung gemäß Anspruch 2 zum Festhalten des Instruments (9) an einem Sechskantkopf (4), **dadurch gekennzeichnet, daß** die Elemente zum Festhalten mindestens zwei Stützelemente (26) aufweisen, die so ausgebildet sind, daß sie jeweils mit zwei nebeneinander liegenden Flächen (29) des Kopfes (4) zusammenarbeiten können, und zwei radiale Stellschrauben (27), die den beiden Stützelementen jeweils diametral gegenüberliegen.

4. Vorrichtung gemäß Anspruch 1, **dadurch gekennzeichnet, daß** die Elemente zum Festhalten zwei Stützelemente (31, 32) in der Form eines V mit einem Öffnungswinkel von 120° aufweisen, die von zwei Haken (23) gehalten werden, die einander diametral gegenüberliegen.

5. Vorrichtung gemäß Anspruch 4, **dadurch gekennzeichnet, daß** eines (31) der beiden Stützelemente einstückig ist mit dem Haken (23), der es trägt, während das andere drehbar am Ende einer radialen Stellschraube (27) befestigt ist, welche durch den anderen Haken (23) geschraubt ist.

6. Vorrichtung gemäß Anspruch 4, **dadurch gekennzeichnet, daß** die beiden Haken (23) gelenkig an dem Kern (22) angebracht sind und über diesen hinaus verlängert sind, wobei ihre den Stützelementen (31, 32) gegenüberliegenden Enden durch einen Abstandsmechanismus (33), insbesondere einen Gelenkmechanismus, miteinander verbunden sind.

7. Vorrichtung gemäß einem der Ansprüche 1 bis 6, **dadurch gekennzeichnet, daß** der Kern (22) ein Stützteil aufweist, welches dazu dient, einen überstehenden radialen Bereich (12) des Instruments (9) gegen die obere Fläche des Kopfes (4) zu drücken.

8. Vorrichtung gemäß Anspruch 7, **dadurch gekennzeichnet, daß** der Kern (22) einen Teil (10) des Instruments (9), der neben dem genannten Bereich (12) liegt, mit einem radialen Spiel umgibt.

9. Dynamometrischer Apparat zum Feststellen des Feststellgrades eines Gewindebauteils (3), **dadurch gekennzeichnet, daß** er ein Instrument (9) und eine Vorrichtung (21) zum Festhalten des Instruments gemäß einem der Ansprüche 1 bis 8 aufweist.

10. Apparat gemäß Anspruch 9, **dadurch gekennzeichnet, daß** der Kern (22) der Vorrichtung zum Festhalten (21) zwischen einem Außenflansch (12) des Instruments (9) und einem Halteelement (18) des Instruments angeordnet ist.

## Claims

1. Device for attaching an instrument (9) onto the outside of the driving head (4) of a screw-threaded member (3), **characterised in that** it comprises a central core (22) which, in use, is fixed to the instrument, and from which there extend claws (23) provided with means (26, 27; 31, 32) for attaching the core onto the peripheral surface of the head, these claws leaving, in at least one direction, free access to the diametrically opposed driving profiles (30) of this head, the attachment means (26, 27; 31, 32) being adapted to co-operate with any part of the height of the peripheral surface of the head (4).

2. Device according to Claim 1 or 1, **characterised in that** the attachment means include at least one element (26) for engaging against a side or a corner of the head (4), provided on a first claw (23), and a radial clamping screw (27) in screw-threaded engagement through a second claw (23) diametrically opposite the first claw.

3. Device according to Claim 2, for attaching the instrument (9) onto a hexagonal head (4), **characterised in that** the attachment means include at least two engaging elements (26) adapted to co-operate respectively with two adjacent faces (29) of the head (4), and two radial clamping screws (27) respectively diametrically opposite these two engaging elements.

4. Device according to Claim 1, **characterised in that** the attachment means include two engaging elements (31, 32) of obtuse V shape making an included angle of 120°, carried by two diametrically opposed claws (23).

5. Device according to Claim 4, **characterised in that** one (31) of the two engaging elements is fixed to the claw (23) which carries it, whereas the other is rotatably mounted at the end of a radial clamping screw (27) which is screwed through the other claw (23).

6. Device according to Claim 4, **characterised in that** the two claws (23) are articulated to the core (22) and extend away from the latter, their ends which are opposite the engaging elements (31, 32) being connected by a spreading mechanism (33), in particular a toggle joint.

7. Device according to any one of Claims 1 to 6, **characterised in that** the core (22) has an engaging part designed to clamp, against the top surface of the head (4), a radially projecting region (12) of the instrument (9).

8. Device according to Claim 7, **characterised in that** the core (22) surrounds a part (10) of the instrument (9) adjacent to the said region (12) with some radial play.

9. Dynamometric apparatus for determining the degree of tightness of a screw-threaded member (3), **characterised in that** it comprises an instrument (9) and a device (21) for attaching this instrument in accordance with any one of Claims 1 to 8.

10. Apparatus according to Claim 9, **characterised in that** the core (22) of the attachment device (21) is interposed between an external collar (12) of the instrument (9 and a retaining member (18) of this instrument.
